# EUROPÄISCHE PATENTANMELDUNG

(11) **EP 2 196 113 A2**
(43) Veröffentlichungstag der Anmeldung: **16.06.2010**
(21) Anmeldenummer: 09014434.6
(22) Anmeldetag: 19.11.2009
(51) Int. Cl.: A47J 27/00, A47J 27/62, A47J 36/24, A47J 36/32, A47J 37/10

(54) **Garkessel für die Zubereitung von Speisen**

(30) Priorität: 05.12.2008 DE 102008063553
(71) Anmelder: Rieber GmbH & Co. KG, 72770 Reutlingen (DE)
(72) Erfinder: Maier, Max, 71636 Ludwigsburg (DE)
(74) Vertreter: Patentanwälte Ruff, Wilhelm, Beier, Dauster & Partner

(57) **Zusammenfassung**

1. Garkessel für die Zubereitung von Speisen.
2.1. Die Erfindung betrifft einen Garkessel für die Zubereitung von Speisen, mit einem topfartigen Garraum, einem Deckel zum Verschließen des Garraums, wobei der Boden des Garraums aus gut wärmeleitfähigem Material besteht, und einer Heizeinrichtung zum Beheizen des Bodens.
2.2. Erfindungsgemäß ist wenigstens ein Temperatursensor zum Erfassen einer Temperatur im Garraum, wenigstens ein Temperatursensor zum Erfassen einer Temperatur einer Bodenplatte des Bodens und wenigstens eine Steuereinheit zum Regeln der Heizeinrichtung in Abhängigkeit der Temperatur im Garraum und/oder der Temperatur der Bodenplatte vorgesehen.
2.3. Verwendung z.B. zum drucklosen Dampfgaren.

3. Fig. 2

## Beschreibung

Die Erfindung betrifft einen Garkessel für die Zubereitung von Speisen mit einem topfartigen Garraum, einem Deckel zum Verschließen des Garraums, wobei der Boden des Garraums aus gut wärmeleitfähigem Material besteht, und einer Heizeinrichtung zum Beheizen des Bodens.

Bekannte Garkessel sind beispielsweise als Kochkessel oder Dampfkochkessel ausgebildet. Es ist auch bekannt, die Heizeinrichtung in Abhängigkeit der Temperatur im Garraum zu regeln. Das Augenmerk liegt bei solchen bekannten Kochkesseln aber auf der möglichst exakten Einhaltung der Temperatur im Garraum und nicht auf einer energieeffizienten Regelung.

Mit der Erfindung soll ein flexibel einsetzbarer und energieeffizient betreibbarer Garkessel geschaffen werden.

Erfindungsgemäß ist hierzu ein Garkessel für die Zubereitung von Speisen mit einem topfartigen Garraum, einem Deckel zum Verschließen des Garraums, wobei der Boden des Garraums aus gut wärmeleitfähigem Material besteht, und einer Heizeinrichtung zum Beheizen des Bodens vorgesehen, bei dem wenigstens ein Temperatursensor zum Erfassen einer Temperatur im Garraum, wenigstens ein Temperatursensor zum Erfassen einer Temperatur der Bodenplatte und wenigstens eine Steuereinrichtung zum Regeln der Heizeinrichtung in Abhängigkeit der Temperatur im Garraum und/oder der Temperatur der Bodenplatte vorgesehen ist.

Indem sowohl ein Temperatursensor zum Erfassen einer Temperatur im Garraum als auch ein Temperatursensor zum Erfassen einer Temperatur der Bodenplatte vorgesehen ist, lässt sich der erfindungsgemäße Garkessel zum einen sehr flexibel einsetzen, da im Garraum nicht nur gekocht, sondern auf dem Boden des Garraums auch gebraten oder gegrillt werden kann. Soll beispielsweise im Garraum dampfgegart werden, wird die Temperatur im Garraum geregelt. Soll dahingegen auf dem Boden des Garraums gebraten oder gegrillt werden, wird die Temperatur der Bodenplatte geregelt. Darüber hinaus ermöglicht das Vorsehen eines Temperatursensors zum Erfassen einer Temperatur im Garraum und wenigstens eines Temperatursensors zum Erfassen einer Temperatur der Bodenplatte einen äußerst energieeffizienten Betrieb, da die Heizeinrichtung durch einen Temperatursensor zum Erfassen einer Temperatur der Bodenplatte besser dosiert werden kann, auch wenn nicht die Temperatur der Bodenplatte, sondern die Garraumtemperatur geregelt wird. Beispielsweise macht es beim Dampfgaren keinen Sinn, mit maximaler Heizleistung zu versuchen, die Bodenplatte möglichst stark zu erhitzen, da im Garraum befindliches Wasser beim drucklosen Dampfgaren ohnehin nicht über den Siedepunkt erhitzt werden kann. Indem die Temperatur der Bodenplatte beispielsweise auf einen Wert von maximal 120°C gehalten wird, kann dadurch die Abwärme verringert werden, und es wird nur genau die Energiemenge eingesetzt, die zum Aufrechterhalten der erforderlichen Garraumtemperatur nötig ist.

In Weiterbildung der Erfindung ist der Temperatursensor zum Erfassen einer Temperatur im Garraum als Kerntemperatursensor mit einer Einstecklanze und einem flexiblen Zuleitungskabel ausgebildet.

Auf diese Weise wird die Flexibilität des erfindungsgemäßen Garkessels weiter erhöht, da mittels des Kerntemperatursensors die Kerntemperatur von in dem Garkessel zuzubereitenden Speisen überwacht werden kann. Der erfindungsgemäße Garkessel kann damit für das "auf den Punkt garen" von Lebensmitteln verwendet werden.

In Weiterbildung der Erfindung ist an einer dem Garraum zugewandten Unterseite des Deckels eine Halterung zum lösbaren Anordnen des Kerntemperatursensors vorgesehen.

Auf diese Weise kann der Kerntemperatursensor entweder unmittelbar in zuzubereitende Speisen eingesteckt werden oder kann zur Überwachung der Garraumtemperatur kurz unterhalb des Deckels in der Halterung angeordnet werden. Auf diese Weise kann der Kerntemperatursensor in einer Doppelfunktion eingesetzt werden und ein zusätzlicher Temperatursensor, sei es zum ausschließlichen Erfassen einer Kerntemperatur oder zum ausschließlichen Erfassen einer Garraumtemperatur, kann eingespart werden.

In Weiterbildung der Erfindung weist die Heizeinrichtung wenigstens zwei Segmente auf, um Abschnitte der Bodenplatte unterschiedlich beheizen zu können, und jedem der Abschnitte der Bodenplatte ist wenigstens ein Temperatursensor und ein Regelkreis der Steuereinrichtung zugeordnet.

Durch diese Maßnahmen kann die Bodenplatte in unterschiedlichen Bereichen unterschiedlich heiß eingestellt werden, und es ist beispielsweise auf dem Boden des Garkessels gleichzeitig das scharfe Anbraten und das Warmhalten möglich.

In Weiterbildung der Erfindung besteht der Boden aus einem Mehrschichtmaterial.

Auf diese Weise kann beispielsweise die gute Wärmeleitfähigkeit von Aluminium mit den problemlosen Pflegeeigenschaften von Edelstahl kombiniert werden, indem beispielsweise die dem Garraum zugewandte Oberseite des Bodens aus einer Edelstahlschicht besteht und darunter eine gut wärmeleitfähige Schicht, beispielsweise aus Aluminium, angeordnet wird.

In Weiterbildung der Erfindung besteht der Boden aus Mehrschichtmaterial mit wenigstens drei Schichten, einer nicht rostenden Stahlschicht, die den Boden des Garraums bildet, einer gut wärmeleitfähigen Metallschicht, insbesondere Aluminium, die an die nicht rostende Stahlschicht angrenzt, und einer weiteren Stahlschicht, die an die gut wärmeleitfähige Schicht angrenzt und die von der Heizeinrichtung beaufschlagt wird.

Durch diese Maßnahmen kann aufgrund des wenigstens dreischichtigen Aufbaus ein Verwerfen der Bodenplatte bei Erwärmung verhindert werden. Gleichzeitig kann die mittels der Heizeinrichtung eingeleitete Wärme sehr gleichmäßig über die gesamte Bodenplatte verteilt werden, da die gut wärmeleitfähige Aluminiumschicht die Verteilung der Wärme nicht behindert. Es ist beispielsweise aber auch möglich, die von der Heizeinrichtung beaufschlagte Stahlschicht magnetisierbar auszuführen, so dass als Heizeinrichtung eine induktive Energiequelle genutzt werden kann.

In Weiterbildung der Erfindung sind Mittel und insbesondere Einsätze für Gastronormbehälter vorgesehen, um Gastronormbehälter im Garraum und im Abstand vom Boden des Garraums anordnen zu können.

Indem Gastronormbehälter in den Garraum eingehängt werden können, die beispielsweise gelocht sind, ist ein problemloses Dampfgaren von Lebensmitteln möglich.

In Weiterbildung der Erfindung ist der Garkessel auf einem fahrbaren Untergestell angeordnet, das Staufächer aufweist.

Durch Vorsehen eines fahrbaren Untergestells mit Staufächern wird der erfindungsgemäße Garkessel mobil und bereits dadurch äußerst flexibel einsetzbar. Der erfindungsgemäße Garkessel kann dabei, wie vorstehend bereits erwähnt wurde, zahlreiche Geräte einer konventionellen Küche ersetzen, so dass mit den Staufächern für Kochgerätschaften eine mobile und auf äußerst unterschiedliche Art und Weise einsetzbare Garstelle geschaffen wird.

Das der Erfindung zugrundeliegende Problem wird auch durch ein Verfahren zum Betreiben eines Garkessels nach einem der vorstehenden Ansprüche gelöst, mit folgenden Schritten:
Aufheizen der Bodenplatte bis auf einen vordefinierten ersten Temperaturwert, Konstanthalten der Temperatur der Bodenplatte bei dem ersten Temperaturwert,
Überwachen einer Garraumtemperatur und Erfassen des Erreichens eines vordefinierten zweiten Temperaturwerts im Garraum,
Konstanthalten der Temperatur im Garraum bei dem zweiten Temperaturwert mittels Regeln der Temperatur der Bodenplatte bei gleichzeitiger Überwachung, dass die Temperatur der Bodenplatte den ersten Temperaturwert nicht übersteigt.

Durch diese erfindungsgemäßen Verfahrensschritte ist ein äußerst energieeffizienter Betrieb eines Garkessels möglich. So wird zunächst die Bodenplatte bis auf einen vordefinierten ersten Wert aufgeheizt und die Temperatur bei diesem Wert dann konstant gehalten, wobei der vordefinierte erste Wert auf die vorgesehene Zubereitungsart von Speisen abgestimmt ist. Beispielsweise wird beim drucklosen Dampfgaren die Bodenplatte zunächst möglichst schnell auf einen Wert von etwa 120°C aufgeheizt und dann auf diesem Wert konstant gehalten. Weiter wird die Temperatur im Garraum überwacht und nach Erreichen einer vordefinierten zweiten Temperatur im Garraum, beispielsweise 90°C, wird die Garraumtemperatur mittels einer Regelung der Temperatur der Bodenplatte konstant gehalten. So wird beispielsweise dann, wenn die Temperatur im Garraum unter 90°C sinkt, die Bodenplatte stärker aufgeheizt, um Dampf nachzuliefern und die Temperatur im Garraum wieder auf 90°C zu steigern. Gleichzeitig wird bei dem erfindungsgemäßen Verfahren aber darauf geachtet, dass die Temperatur der Bodenplatte beim erneuten Aufheizen nicht den ersten vordefinierten Wert von 120°C übersteigt. Auf diese Weise kann während der Regelung die Abwärme und der dadurch entstehende Energieverlust gering gehalten werden. Bei einer Überwachung einer Kerntemperatur können andere Temperaturwerte oder Temperaturverläufe maßgeblich sein, immer aber ist es möglich, einen Garkessel in energieeffizienter Weise zu betreiben, ohne einen Qualitätsverlust der zubereiteten Speisen befürchten zu müssen.

Weitere Merkmale und Vorteile der Erfindung ergeben sich aus den Ansprüchen und der nachfolgenden Beschreibung einer bevorzugten Ausführungsform der Erfindung im Zusammenhang mit den Zeichnungen. In den Zeichnungen zeigen:
- Fig. 1: eine schematische Ansicht eines erfindungsgemäßen Garkessels von schräg vorne und
- Fig. 2: eine abschnittsweise, schematische Schnittansicht des Garkessels der Fig. 1.

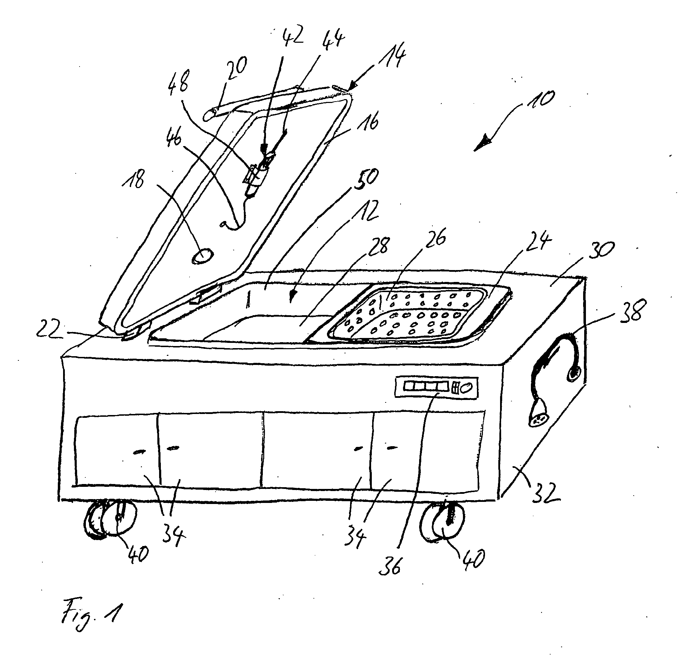

In der Darstellung der Fig. 1 ist ein erfindungsgemäßer Garkessel 10 gemäß einer bevorzugten Ausführungsform von schräg oben schematisch dargestellt. Der Garkessel 10 weist einen topfartigen Garraum 12 und einen Deckel 14 zum Verschließen des Garraums auf. Der Deckel 14 ist mit einer umlaufenden, elastischen Dichtung 16 versehen, um den Garraum 12 verschließen zu können. Im Deckel 16 ist ein Dampfauslass 18 vorgesehen, der verhindert, dass im Garraum 12 im Kochbetrieb ein unzulässig hoher Überdruck entsteht. Der Garkessel 10 ist für das drucklose Dampfgaren vorgesehen.

Der Deckel 14 ist auf seiner, dem Garraum 12 gegenüberliegenden Seite mit einem Handgriff 20 versehen und mit einem Klappscharnier 22 auf einer Oberseite des Garkessels 10 schwenkbar befestigt. In bekannter Weise sind die Scharniere 22 beispielsweise mittels Federn vorgespannt, um den Deckel 14 in der geöffneten Stellung halten zu können.

In der Darstellung der Fig. 1 ist in den Garraum 12 auf dessen rechter Seite ein Einsatz 24 eingesetzt, der einerseits auf der umlaufenden Begrenzung des Garraums 12 aufliegt und andererseits eine Ausnehmung definiert, in die ein Gastronormbehälter 26 eingesetzt werden kann. Der Garraum 12 ist dabei so bemessen, dass der gelochte Gastronormbehälter 26 mit seiner Unterseite in Abstand vom Boden 28 des Garraums 12 angeordnet ist. Mittels des Einsatzes 24 und dem Gastronormbehälter 26 kann in dem Garkessel 10 dadurch dampfgegart werden.

Der Garraum 2 ist in eine Oberfläche 30 eingelassen, auf der die Scharniere 22 des Deckels 14 befestigt sind und die die Oberseite eines fahrbaren Untergestells 32 bildet. Das Untergestell 32 ist mit mehreren Türen 34 versehen, die Zugang zu Staufächern unterhalb des Garraums 12 gewähren. Innerhalb des Untergestells 32 sind eine elektrische Heizeinrichtung für den Boden 28 des Garraums 12 und eine Steuer- und Regeleinheit vorgesehen, die in der Darstellung der Fig. 1 nicht erkennbar ist. Auf einer, einem Benutzer zugewandten Vorderseite des fahrbaren Untergestells 32 ist eine Anzeige- und Bedieneinheit 36 vorgesehen. In der Anzeige- und Bedieneinheit 36 sind Anzeigefelder, Tastenfelder und Bedienknöpfe vorgesehen, um Temperaturen an verschiedenen Stellen des Garkessels 10 anzuzeigen und um Betriebsprogramme, Zeiten und Temperaturen einzustellen, mit bzw. bei denen der Garkessel betrieben werden soll. Die Anzeige- und Bedieneinheit 36 weist auch eine Schnittstelle auf, um einen durchgeführten Garvorgang protokollieren zu können.

An dem fahrbaren Untergestell 32 ist ein elektrisches Zuleitungskabel 38 zu erkennen, das der Heizeinrichtung im Inneren des Untergestells 32 elektrische Energie zuführt. Das fahrbare Untergestell 32 ist mit Lenkrollen 40 versehen.

An der, dem Garraum 12 zugewandten Unterseite des Deckels 14 ist ein Kerntemperatursensor 42 zu erkennen, der eine Einstecklanze 44 und ein flexibles Zuleitungskabel 46 aufweist. In der, in Fig. 1 dargestellten Stellung ist der Kerntemperatursensor 42 in einer Klemmhalterung 48 angeordnet, die auf der Unterseite des Deckels 14 vorgesehen ist. Für eine Erfassung einer Temperatur im Garraum 12 bei geschlossenem Deckel wird der Kerntemperatursensor 42 in der Halterung 48 angeordnet. Um die Kerntemperatur von zuzubereitenden Speisen zu erfassen, wird der Kerntemperatursensor 42 aus der Halterung 48 herausgenommen und mit der Einstecklanze 44 in die zuzubereitenden Speisen eingesteckt. Das flexible Zuleitungskabel 46 ist dabei lange genug, um den Kerntemperatursensor 42 gegebenenfalls auch bei geöffnetem Deckel in Speisen im Garraum 12 einstecken zu können. Der topfartige Garraum 12 kann mit einem Abfluss versehen sein.

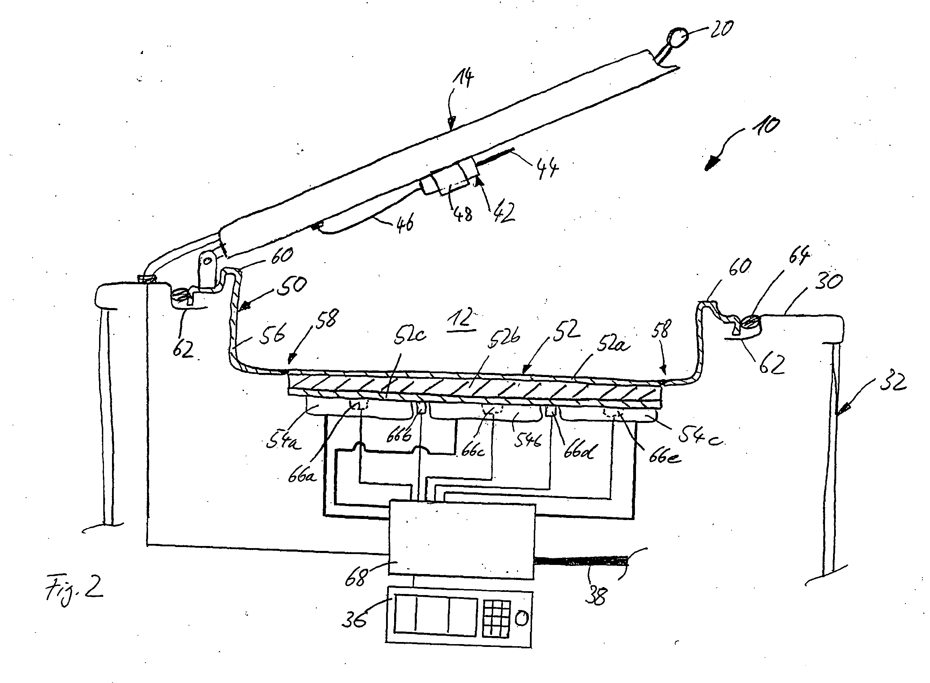

Die Darstellung der Fig. 2 zeigt eine schematische, abschnittsweise Schnittansicht des Garkessels 10 der Fig. 1, wobei der Deckel 14 nicht geschnitten dargestellt ist.

In der Darstellung der Fig. 2 gut zu erkennen ist der Aufbau einer Garraumwanne 50, die die seitliche und untere Begrenzung des topfartigen Garraums 12 bildet. Die Garraumwanne 50 weist einen abschnittsweise mittels einer Bodenplatte 52 gebildeten Boden auf, wobei die Bodenplatte 52 aus insgesamt drei Metallschichten besteht. Eine erste Schicht 52a, die dem Garraum 12 zugewandt ist, besteht aus rostfreiem Stahl. Auf diese rostfreie Stahlschicht 52a folgt eine Aluminiumschicht 52b mit erheblich größerer Dicke. Die Aluminiumschicht 52b ist sehr gut wärmeleitfähig und sorgt für eine gleichmäßige Wärmeverteilung im Boden 52. Auf die Aluminiumschicht 52b folgt wieder eine dünnere Stahlschicht 52c. Diese Stahlschicht 52c stellt zum einen sicher, dass sich die Bodenplatte 52 bei Erwärmung nicht verbiegt, kann zum anderen aber beispielsweise auch aus magnetisierbarem Stahl bestehen, um eine induktive Beheizung der Bodenplatte 52 zu ermöglichen. Auf der dem Garraum 12 abgewandte Stahlplatte 52c sind mehrere Heizeinrichtungen 54a, 54b und 54c angeordnet. In der Darstellung der Fig. 2 sind lediglich drei Heizeinrichtungen 54a, 54b, 54c zu erkennen. Tatsächlich können aber beispielsweise sechs Heizeinrichtungen 54a, 54b, 54c nebeneinander bzw. hintereinander auf die Bodenplatte 52 aufgesetzt sein.

Die Garraumwanne 50 weist weiter einen umlaufenden Rand 56 auf, der aus nicht rostendem Stahl besteht und mittels einer umlaufenden Schweißnaht 58 mit der dem Garraum zugewandten nicht rostenden Stahlschicht 52a der Bodenplatte 52 dicht verschweißt ist. Der Rand 56 bildet auch einen erhöhten Auflagerand 60 für den Deckel 14 aus, auf dem dieser dann im geschlossenen Zustand aufliegt. Die gesamte Garraumwanne 50 wiederum liegt auf einem umlaufenden Absatz 62 des Untergestells 32 auf, wobei ein Zwischenraum zwischen der Oberfläche 30 und der Garraumwanne 50 mittels eines elastischen Dichtmaterials 64 verschlossen ist. Der erfindungsgemäße Garkessel 10 ist durch diesen Aufbau leicht und hygienisch einwandfrei zu reinigen.

Neben den Heizeinrichtungen 54a, 54b, 54c sind insgesamt 5 Temperatursensoren 66a, 66b, 66c, 66d und 66e auf die dem Garraum 12 abgewandte Seite der Bodenplatte 52 aufgesetzt. Die Temperatursensoren 66a, 66c und 66e sind dabei an und für sich nicht zu erkennen und daher gestrichelt dargestellt. Es bleibt festzustellen, dass die Temperatursensoren 66a bis 66e so auf der Bodenplatte 52 angeordnet sind, dass eine möglichst repräsentative Aussage über die Temperatur der Bodenplatte 52 in unterschiedlichen Abschnitten gegeben werden kann. Beispielsweise können die Heizeinrichtungen 54a, 54b, 54c unterschiedlich stark aufgeheizt werden, um dann in zwei oder drei unterschiedlichen Abschnitten der Bodenplatte 52 unterschiedliche Temperaturen hervorzurufen. Auf einem ersten Abschnitt der Bodenplatte 52 kann dann beispielsweise scharf angebraten werden, während auf einem oder zwei weiteren Abschnitten der Bodenplatte 52 warmgehalten werden kann.

Eine zentrale Steuereinheit 68 ist mittels Signalleitungen mit den Temperatursensoren 66a, 66b, 66c, 66d, 66e an der Bodenplatte 52 und mit dem Kerntemperatursensor 42 verbunden. Die zentrale Steuereinheit 68 ist darüber hinaus über Steuer- und Energieleitungen mit den Heizeinrichtungen 54a, 54b und 54c verbunden. Auch die Anzeige- und Bedieneinheit 36 steht über Signalleitungen mit der Steuereinheit 68 in Verbindung. Die Steuereinheit 68 ist schließlich über das elektrische Zuleitungskabel 38 mit einem Stromnetz verbindbar.

Die Steuereinheit 68 weist unter anderem wenigstens einen Regelkreis auf, um eine Temperatur im Garraum 12, die mittels des Kerntemperatursensors 42 erfasst wird, zu regeln. Die Steuereinheit 68 weist darüber hinaus mehrere Regelkreise auf, um die Temperatur der Bodenplatte 52 zu regeln, wobei getrennte Regelkreise für die einzelnen Abschnitte der Bodenplatte 52, die von unterschiedlichen Heizeinrichtungen 54a, 54b, 54c beaufschlagt werden, vorgesehen sind. Mittels der Steuereinheit 68 kann somit eine Temperatur im Garraum 12 und/oder Temperaturen der verschiedenen Abschnitte der Bodenplatte geregelt werden.

Mittels der Anzeige- und Bedieneinheit 36 werden Temperaturen und Garzeiten von einem Bediener vorgegeben oder es können vorprogrammierte Bedienprogramme eingegeben werden. An der Anzeige- und Bedieneinheit 36 kann auch ein Protokoll über eine geeignete Schnittstelle ausgelesen werden, um den durchgeführten Garvorgang den gesetzlichen Anforderungen entsprechend protokollieren zu können. In der Anzeige- und Bedieneinheit 36 sind auch Anzeigefelder für das Anzeigen der gerade vorliegenden Temperatur an der Bodenplatte 52 und/oder im Garraum 12 sowie beispielsweise für das Anzeigen einer noch verbleibenden Garzeit vorgesehen.

Beim Betreiben des erfindungsgemäßen Garkessels 10 wird, wenn beispielsweise Dampfgaren vorgesehen ist, die Bodenplatte 52 zunächst möglichst schnell auf einen Wert von beispielsweise 120°C aufgeheizt, indem alle Heizeinrichtungen 54a, 54b, 54c mit der maximal möglichen Leistung betrieben werden. Die maximale elektrische Leistung wird so lange aufrechterhalten, bis eine Temperatur im Garraum 12, also am Kerntemperatursensor 42, etwa 90°C erreicht hat. Sobald diese von einem Bediener vordefinierte oder durch ein Benutzerprogramm vordefinierte Temperatur im Garraum 12 erreicht ist, die beim Niedertemperaturgaren beispielsweise auch nur 60°C betragen kann, wird mittels der Steuereinheit 68 die Temperatur im Garraum 12 geregelt, indem die Heizeinrichtungen 54a, 54b, 54c unterschiedlich stark angesteuert werden, um die Temperatur im Garraum 12 auf dem vordefinierten Wert von 90°C zu halten. Sinkt die Temperatur im Garraum 12 unter 90°C ab, wird die den Heizeinrichtungen 54a, 54b, 54c zugeführte elektrische Leistung erhöht, um mehr Dampf zu erzeugen und die Temperatur im Garraum 12 wieder anzuheben. Dabei wird aber darauf geachtet, dass die mittels der Temperatursensoren 66a bis 66e erfasste Temperatur der Bodenplatte 52 nicht über 120°C steigt. Dies deshalb, da eine beispielsweise über 120°C hinausgehende Temperatur der Bodenplatte 52 lediglich die Abwärme überproportional erhöhen würde, nicht aber zu einem schnelleren Temperaturausgleich im Garraum 12 führen würde. Es ist dabei zu berücksichtigen, dass die Temperatursensoren 66a bis 66e auf der, dem Garraum 12 abgewandten Unterseite der Bodenplatte 52 angeordnet sind. Zwar ist die Bodenplatte 52 insgesamt sehr gut wärmeleitfähig, dennoch wird die dem Garraum zugewandte Seite der Bodenplatte 12 natürlich im Wesentlichen durch das im Dampfbetrieb die Bodenplatte 52 bedeckende Flüssigkeitsniveau etwa auf der Siedetemperatur der Flüssigkeit gehalten. Ein übermäßiges Aufheizen der Bodenplatte 52 würde infolgedessen vor allem dazu führen, dass die nach unten, in den Unterbau 32 abgestrahlte Abwärme wesentlich erhöht und dadurch Energie schlecht genutzt wird.

Wird auf der Bodenplatte 52 dahingegen beispielsweise gebraten oder gegrillt, regelt die Steuereinheit 68 mittels unterschiedlich starker elektrischer Leistung an den Heizeinrichtungen 54a, 54b, 54c die Temperatur der Bodenplatte 52 auf einen voreingestellten Wert. Die Bodenplatte 52 kann in unterschiedlichen Abschnitten dabei unterschiedliche Temperaturen aufweisen, die jeweils mittels separater Regelkreise in der Steuereinheit 68 geregelt und dadurch konstant gehalten werden können. Während einer solchen Regelung der Temperatur der Bodenplatte 52 kann beispielsweise auch fortlaufend die Kerntemperatur mittels des Kerntemperatursensors 42 einer zuzubereitenden Speise erfasst werden. Um beispielsweise ein Anbrennen der auf der Bodenplatte aufliegenden Speisen zu verhindern, kann die Steuereinheit 68 vorsehen, dass die Temperatur der Bodenplatte 52 einen vordefinierten Wert nicht übersteigt. Nachdem die vordefinierte Kerntemperatur erreicht oder über einen vordefinierten Zeitraum gehalten wurde, kann die Steuereinheit 68 über die Anzeige- und Bedieneinheit 36 die Beendigung des Garprozesses anzeigen und gegebenenfalls die Heizeinrichtungen 54a, 54b, 54c abschalten.

Insgesamt ist der erfindungsgemäße Garkessel 10 in äußerst flexibler Weise einsetzbar, da er beispielsweise zum Braten und Grillen oder Garen von Speisen unmittelbar auf der Bodenplatte 52 eingesetzt werden kann und darüber hinaus auch das drucklose Dampfgaren im Garraum 12 möglich ist, beispielsweise in dem in Fig. 1 dargestellten Gastronormbehälter 26.

## Patentansprüche

1. Garkessel für die Zubereitung von Speisen, mit einem topfartigen Garraum (12), einem Deckel (14) zum Verschließen des Garraums (12), wobei ein Boden des Garraums (12) aus gut wärmeleitfähigem Material besteht und eine Heizeinrichtung (54a, 54b, 54c) zum Beheizen des Bodens vorgesehen ist, **dadurch gekennzeichnet, dass** wenigstens ein Temperatursensor (42) zum Erfassen einer Temperatur im Garraum (12), wenigstens einen Temperatursensor (66a bis 66e) zum Erfassen einer Temperatur einer wenigstens abschnittsweise den Boden des Garraums (12) bildenden Bodenplatte (52) und wenigstens eine Steuereinheit (68) zum Regeln der Heizeinrichtung (54a, 54b, 54c) in Abhängigkeit der Temperatur im Garraum (12) und/oder der Temperatur der Bodenplatte (52) vorgesehen ist.

2. Garkessel nach Anspruch 1, **dadurch gekennzeichnet, dass** der Temperatursensor zum Erfassen einer Temperatur im Garraum (12) als Kerntemperatursensor (42) mit einer Einstechlanze (44) und einem flexiblen Zuleitungskabel (46) ausgebildet ist.

3. Garkessel nach Anspruch 1 oder 2, **dadurch gekennzeichnet, dass** an einer dem Garraum (12) zugewandten Unterseite des Deckels (14) eine Halterung (48) zum lösbaren Anordnen des Kerntemperatursensors (42) vorgesehen ist.

4. Garkessel nach wenigstens einem der vorstehenden Ansprüche, **dadurch gekennzeichnet, dass** die Heizeinrichtung (54a, 54b, 54c) wenigstens zwei Segmente aufweist, um Abschnitte der Bodenplatte (52) unterschiedlich beheizen zu können, und dass jedem der Abschnitte der Bodenplatte (52) wenigstens ein Temperatursensor (66a bis 66e) und ein Regelkreis der Steuereinheit (68) zugeordnet ist.

5. Garkessel nach wenigstens einem der vorstehenden Ansprüche, **dadurch gekennzeichnet, dass** die Bodenplatte (52) aus Mehrschichtmaterial besteht.

6. Garkessel nach Anspruch 5, **dadurch gekennzeichnet, dass** die Bodenplatte (52) aus Mehrschichtmaterial mit wenigstens drei Schichten besteht, einer nicht rostenden Stahlschicht, die den Boden des Garraums (12) bildet, einer gut wärmeleitfähigen Metallschicht, insbesondere Aluminium, die an die nicht rostende Stahlschicht angrenzt, und eine weitere Stahlschicht, die an die gut wärmeleitfähige Schicht angrenzt und die von der Heizeinrichtung (54a, 54b, 54c) beaufschlagt wird.

7. Garkessel nach wenigstens einem der vorstehenden Ansprüche, **dadurch gekennzeichnet, dass** Mittel, insbesondere wenigstens ein Einsatz (24) für wenigstens einen Gastronormbehälter (26), vorgesehen sind, um Gastronormbehälter (26) im Garraum (12) und im Abstand vom Boden des Garraums (12) anordnen zu können.

8. Garkessel nach wenigstens einem der vorstehenden Ansprüche, **dadurch gekennzeichnet, dass** ein fahrbares Untergestell (32) vorgesehen ist, das Staufächer aufweist.

9. Verfahren zum Betreiben eines Garkessels (10) nach einem der vorstehenden Ansprüche, **gekennzeichnet durch** folgende Schritte:
- Aufheizen der Bodenplatte (52) bis auf einen vordefinierten ersten Temperaturwert,
- Konstanthalten der Temperatur der Bodenplatte (52) bei dem ersten Temperaturwert,
- Überwachen einer Temperatur im Garraum (12) und
- Erfassen des Erreichens eines vordefinierten zweiten Temperaturwerts im Garraum (12),
- Konstanthalten der Temperatur im Garraum (12) bei dem zweiten Temperaturwert mittels Regeln der Temperatur der Bodenplatte (52) bei gleichzeitiger Überwachung, dass die Temperatur der Bodenplatte (52) den ersten Temperaturwert nicht übersteigt.
